# EUROPEAN PATENT SPECIFICATION

(11) **EP 0 699 166 B1**
(45) Date of publication and mention of the grant of the patent: **11.07.2001**
(21) Application number: 94917566.5
(22) Date of filing: 25.05.1994
(51) Int. Cl.: B65G 15/02

(54) **A CURVE-SHAPED BELT CONVEYOR**
BOGENFÖRMIGES FÖRDERBAND
CONVOYEUR A BANDE CIRCULAIRE

(30) Priority: 26.05.1993 DK 60393
(43) Date of publication of application: 06.03.1996
(73) Proprietor: SEELEN A/S, DK-6700 Esbjerg (DK)
(72) Inventor: RUD, Mogens, DK-6700 Esbjerg (DK)
(74) Representative: Wittrup, Flemming
(86) International application number: DK9400202
(87) International publication number: WO9427895

(56) References cited:
- EP-A- 0 098 227
- EP-A- 0 134 598
- DE-A- 3 826 953
- DK-B- 134 476
- US-A- 3 217 861
- US-A- 3 358 811
- US-A- 5 038 925

## Description

The present invention concerns a conveyor having an endless flexible belt extending over at least two conical rollers between which the belt is kept stretched in a controlled curve path, said belt being provided at its longest edge with a plurality of guide elements stretching the belt under the engagement of the guide elements with a first travelling path, which is retained with respect to a frame and which extends along the longest edge of the belt in the vicinity of the opposite inner sides of the transport path and the return path of the belt, the conveyor further comprising a second travelling path for the simultaneous engagement of the guide elements and extending substantially in parallel with and at a distance from the first mentioned travelling path in the vicinity of the outer sides of the belt facing away from each other.

Such belt conveyors as it is known from e.g. US patent No. 3 217 861 comprise a frustoconical belt which is stretched between at least two conical rollers and forms an upper plane transport path and a lower plane return path, whereby material may be transported along a curve-shaped path. To ensure that the belt cannot slide off the first-mentioned rollers in operation, the longitudinal outer edge of the belt is frequently retained by means of guide elements. These guide elements retain the belt in the controlled curve path under engagement with some travelling paths adapted for the purpose along the longest edge of the belt, said travelling paths being frequently provided on the inner side of U-profiles which are firmly mounted on the inner side of a gable which extends outside the entire longest edge of the belt and which moreover serves as a frame for the conveyor.

Since the travelling paths for the guide elements, as stated above, consist of U-shaped profiles, it is clear that guide elements extend within these and are therefore not very accessible with a view to cleaning and service of the guide elements. Since such conveyors are frequently used in the industry in connections where it is important to be able to maintain a high degree of hygiene and where it is important to be able to service the system quickly and simply, it is desirable that said guide elements are easily accessible from the outer side of the conveyor, which is not the case with this known type.

EP patent No. 98227 discloses a curve-shaped conveyor which remedies the above-mentioned drawbacks. This is achieved in that frame elements of the conveyor are preferably present between the upper carrying face and the lower return face of the belt. It is hereby made possible for the guide elements to engage the frame on the outside of the frame, as distinct from the above-mentioned prior art in which the guide elements are retained in U-profiles on the inner side of the frame. However, a serious drawback of the conveyor according to EP patent No. 98227 is that the engagement face of the guide elements is offset with respect to the plane of the conveyor belt, toward the inner side of the belt. This means that the guide elements are subjected to a moment load in use, so that the point of attachment of the guide element on the belt is pressed down against the support of the belt, which results in friction against the support and consequently wear and noise. In addition, the above-mentioned moment load may involve a local distortion of the belt from its plane, which, in practice, may entail reduced service life of the belt.

DK patent No. 134 476 discloses a similar conveyor having a continuous elastic rim mounted along the entire outer edge of the conveyor belt. This conveyor suffers from heavy wear of the elastic rim.

The object of the present invention is therefore to provide a curve-shaped belt conveyor which is easy to clean and service in practice, in particular as regards the guide elements, and which also has an extended service life, as well as to reduce wear and noise.

This is achieved by the means defined in claim 1. This structure ensures that the above-mentioned moment load on the guide elements is compensated by providing an additional travelling path which is retained with respect to the frame and with respect to the first-mentioned travelling path by means of a plurality of yokes, which do not interfere with the accessibility with a view to service and cleaning of the guide elements.

A particularly simple structure is obtained by constructing the yokes as stated in claim 2, while the said travelling paths are simple to position with respect to each other.

When the yokes are secured releasibly, as stated in claims 3 and 4, the travelling paths can be separated from each other in a simple manner with a view to simple and quick exchange of belts.

When the travelling paths are oriented as stated in one of claims 7 or 8, the belt will have a relatively extended service life, since the belt is not subjected to a moment load at the point of attachment at all or only to a very low degree.

The plastics coating on the travelling paths or the rollers according to claim 6 provides a relatively noiseless conveyor.

Claim 10 defines an embodiment of the invention in which the guide elements are mounted resiliently on the belt, thereby ensuring that the springs accommodate tolerance variations in the surface of the travelling path, which results in an extended service life of the belt.

Embodiments of the invention will be described more fully below with reference to the drawing, in which
fig. 1 is a perspective view of a curve conveyor according to the invention without a belt,
fig. 2 is an enlarged cross-sectional view of the travelling paths at right angles to the travelling direction of the conveyor, and
figs. 3 and 4 are sectional views at one of the yokes in fig. 1 of two alternative embodiments for the establishment of the travelling paths.

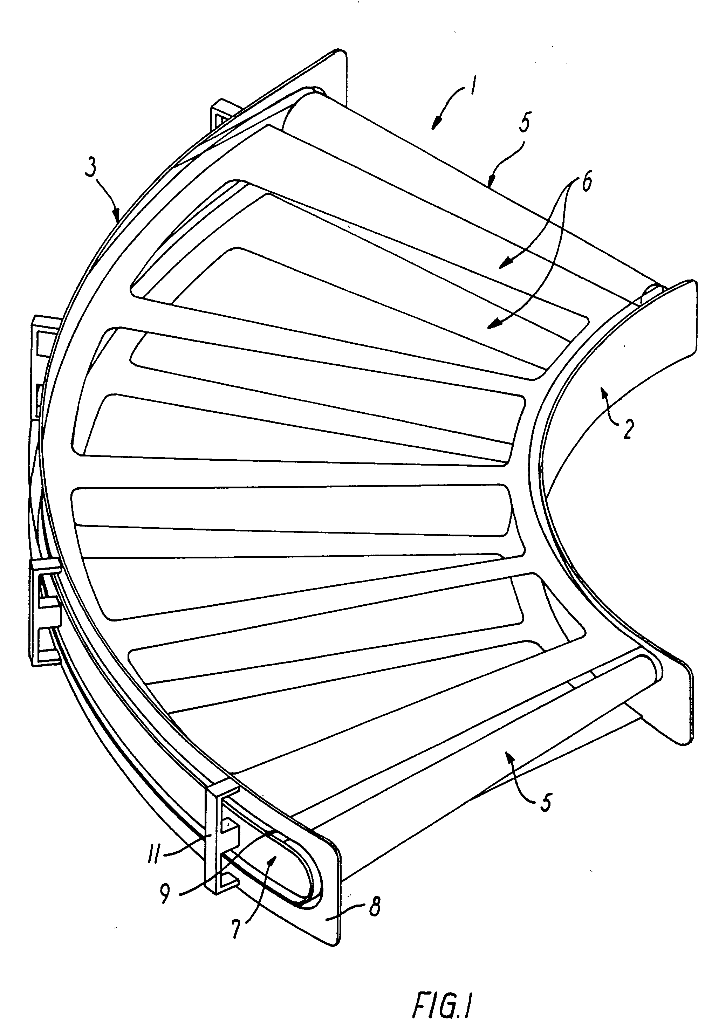

The curve conveyor 1 of the invention is shown in fig. 1 without a belt for clarity. It will be seen in the figure that the conveyor is defined by an inner gable 2 and an outer gable 3 between which the belt 4 (not shown) extends. The inner gable 2 is formed by an elongate plate material which is bent in an arc. Each of the ends of the inner gable 2 mounts a roller set, each consisting of a conical roller 5 about which the belt is to be positioned. Plate-shaped frame members 6 extend between the inner gable 2 and the outer gable 3 and keep the inner gable 2 and the outer gable 3 at a fixed distance from each other, and these frame members 6 also serve as a support for the belt extending between the rollers.

The outer gable is formed by two parts, each of which is made of a plate material and is in the form of an arc, located concentrically with the innermost gable 2 and having a radius larger than the radius of the innermost gable 2 corresponding to the width of the belt. The two plate parts forming the outermost gable 3 are located in the same plane, and the first plate part 7 extends completely within a recess provided in the second plate part 8 so as to form a track 9 between the two gable parts. The gable parts are constructed such that the track 9 assumes the shape of a groove which extends in the outer gable and is aligned with the edge of a belt which is stretched between the two rollers 5. This makes it possible for control elements 10 located at the outermost edge of the belt to extend between the first and the second gable parts 7, 8 in the track 9, whereby the first gable part 7 and the second gable part 8 provide travelling paths for the guide elements with a view to keeping the belt stretched on the curve conveyor 1, since such a belt will try to move toward the innermost gable 2 in use.

The frame members 6 and the conical rollers 5 are secured to the first gable part 7 according to fig. 1, so that these parts as well as the inner gable part 2 form an assembled unit on which the belt can be mounted. The second gable part 8 is retained with respect to the first gable part 7 by means of a plurality of yokes 11, which extend from the outer side of the first gable part 7 across the travelling paths established by the first gable part 7 and the second gable part 8 to the second gable part 8, so that the yokes 11 bridge the travelling paths. The guide elements 10 are hereby extremely easily accessible for cleaning and repair, because the travelling paths are not provided in closed profiles or the like.

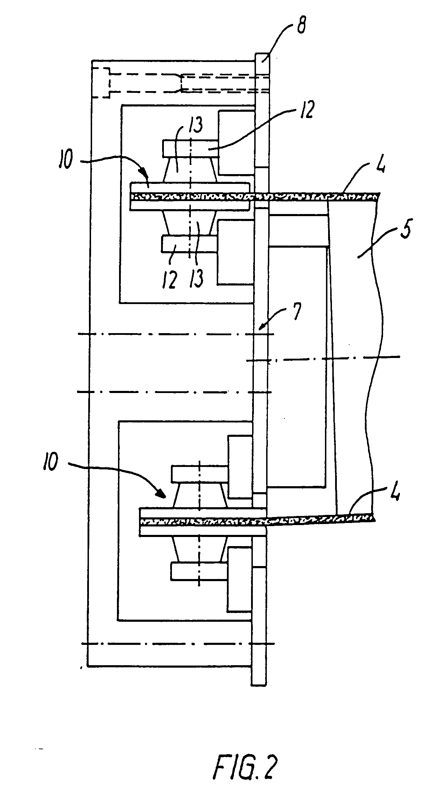

As mentioned above, the guide elements 10 are used for stretching the bels over the curve conveyor, so that the belt is in firm engagement with the conical rollers 5. As will be seen from figs. 2-4, the guide elements 10 may each be formed by two guide rollers 12 which are mounted on their respective shafts 13, which are mounted on their respective sides of the belt 4 in alignment with each other and at right angles to the belt, so that the rollers 12 engage the first gable part 7 and the second gable part 8 and thus guide the belt 4 along the track 9 in the outer gable part, as will be seen from figs. 2, 3 and 4. Owing to the service life of the belt, the shafts 13 may be mounted resiliently on the belt 4, so that dimensional inaccuracies, if any, are accommodated by said resilience.

In the operation of a curve conveyor of this type it is important that the belt 4 is kept tightly stretched in the conveyor 1, and the guide elements are therefore firmly engaged with the travelling paths on the first and the second gable parts 7 and 8. Since, however, it is frequently desirable that the upper carrying plane of the conveyor is approximately horizontal, it is necessary to angle the conical rollers 5 slightly with respect to the horizontal, so that the return side of the belt is oblique with respect to the horizontal. This means that if the travelling paths at the carrying side of the belt and the travelling paths at the return side of the belt are in complete vertical alignment, increased tension will occur in the belt at its return side. In addition, if the surfaces of the travelling paths are completely parallel both on the carrying side of the belt and at the return side of the belt, an abrupt bend will occur in the plane of the belt at the points of attachment of the guide elements, which may result in a reduced service life of the belt.

Fig. 2 shows an embodiment of the invention in which the first gable part 7 and the second gable part 8 are in complete vertical alignment with each other, and where the above-mentioned tension in the belt because of the angle of the conical roller 5 with respect to the horizontal is compensated by providing the gable parts 7, 8 with travelling path coatings which are thicker on the carrying side of the belt than on the return side of the belt. This coating may expediently be made of a plastics material to reduce noise caused by the rolling of the rollers 12 on the travelling path. It will be seen from the figure that in this embodiment the belt is subjected at its return side to distortion out of the plane of the belt at the point of attachment of the guide element.

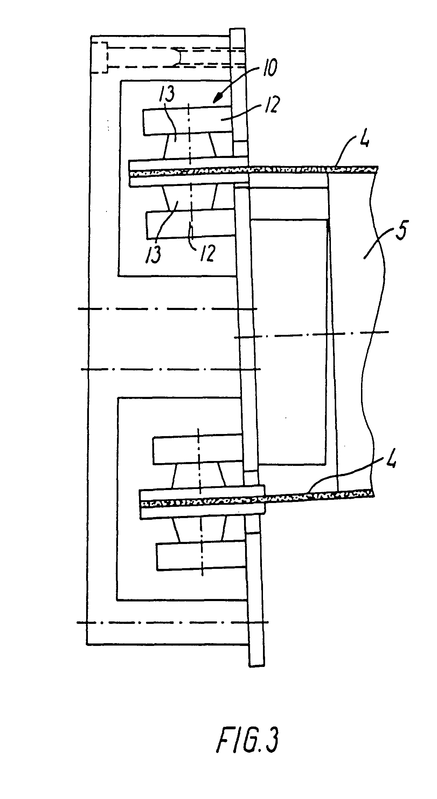

Fig. 3 shows an alternative embodiment for the establishment of the rolling paths, in which the surface of the rolling paths is at right angles to the shaft of the conical roller 5, which ensures complete compensation of the tension in the belt caused by the angle of the conical roller 5 with respect to the horizontal. In addition, it will be seen that the belt 4 is forced out of its plane at a firm angle with respect to the plane of the belt, which reduced the risk of possible fatigue fractures and crack formations at the attachment points of the guide elements.

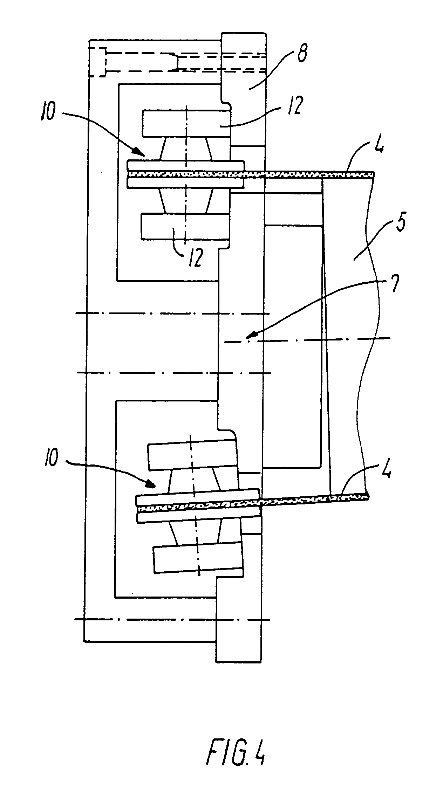

Fig. 4 shows a further embodiment for the establishment of the travelling paths, in which the travelling paths at the carrying side of the belt extend completely vertically, and in which the travelling paths at the return side of the belt are established at an angle with respect to the vertical, so that on the return side the belt is not forced out of its own plane, said travelling paths being offset with respect to each other at the carrying side and the return side of the belt in order to compensate the tension in the belt caused by the angle of the conical roller 5 with respect to the horizontal. An optimum belt service life is hereby obtained, because in this embodiment the belt is not subjected to either inexpedient tensions or distortions out of its plane.

It is clear that by combination a person skilled in the field will be able to arrive at a plurality of different embodiments using the means shown in figs. 2-4, it being possible e.g. to obtain the same angles and positions of the travelling paths according to figs. 3 and 4 by means of travelling path coatings, as shown in fig. 2, achieving the same advantages as regards damping of noise, etc.

## Claims

1. A conveyor (1) having an endless, flexible, cone-shaped belt (4) extending over at least two conical rollers (5) between which the belt (4) is kept stretched in a controlled curve path, said belt (4) being provided at its longest edge with a plurality of guide elements (10) stretching the belt (4) under the engagement of the guide elements (10) with a first travelling path, which is retained with respect to a frame and extends along the longest edge of the belt (4) in the vicinity of the opposite inner sides of the transport path and the return path of the belt (4), the conveyor (1) further comprising a second travelling path for the simultaneous engagement of the guide elements (10) extending substantially in parallel with and at a distance from the first-mentioned travelling path in the vicinity of the outer sides of the belt facing away from each other, **characterized** in that the travelling paths are defined by two arc-shaped gable plates, and in that the gable plate (8) defining the second travelling path is retained with respect to the gable plate (7) defining the first travelling path by means of a plurality of yokes (11) in order to provide free passage for the guide elements, and in that the yokes (11) are spaced apart from each other so as to provide accessibility to the guide elements.

2. A conveyor according to claim 1, **characterized** in that each yoke (11) is formed by a rod-shaped cross bar from whose one side three mutually spaced legs protrude, the two outermost legs being secured to the second travelling path, the intermediate leg being secured to the first travelling path, such that the yokes bridge the transport path and the return path of the belt.

3. A conveyor according to claim 2, **characterized** in that the yokes (11) are secured detachably to the first-mentioned travelling path.

4. A conveyor according to claim 2 or 3, **characterized** in that the yokes (11) are secured detachably to the second travelling path.

5. A conveyor according to one of the preceding claims, **characterized** in that the belt (4) extends between the travelling paths, that each guide element is formed by two parts, secured with respect to each other, on their respective sides of the belt, each of said parts comprising at least one rotary shaft (13) at right angles to the plane of the belt and a roller (12) which engages the travelling path.

6. A conveyor according to one or more of the preceding claims, **characterized** in that the travelling paths or the rollers (12) are coated with or are formed by a plastics material.

7. A conveyor according to one or more of the preceding claims, **characterized** in that the guide elements (10) are mounted resiliently on the belt via spring elements.

8. A conveyor according to one of the preceding claims, **characterized** in that the transport path is plane and thereby describes a circular arc, and that on the return side the belt (4) extends in a conical face extending below the outer plane and having a vertex in the upper plane and in the center of the circular arc and thereby describes a segment of a frustoconical face.

9. A conveyor according to claim 6, **characterized** in that along the greater part of its length the carrying side of the belt is oriented approximately at right angles to the upper horizontal plane, and that the travelling paths at the lower return side are oriented everywhere approximately at right angles to the generatrices of the cone-shaped face.

10. A conveyor according to claim 6, **characterized** in that along the greater part of their length the travelling paths are oriented approximately at right angles to the angle bisectors between the generatrices of the cone-shaped face and the upper plane.

## Patentansprüche

1. Förderer (1) mit einem endlosen flexiblen Keilriemen (4), der sich über zumindest zwei Keilwalzen (5) erstreckt, zwischen denen der Riemen (4) gedehnt in einer kontrollierten Kurvenbahn gehalten wird, wobei der Riemen (4) an seinem längsten Rand mit einer Vielzahl von Führungselementen (10) versehen ist, die den Riemen (4) unter dem Eingriff der Führungselemente (10) mit einer ersten Laufbahn dehnen, die bezüglich eines Rahmens beschränkt ist und sich entlang des längsten Rands des Riemens (4) in der Nähe der gegenüberliegenden Innenseiten der Transportbahn und der Rückführbahn des Riemens (4) erstrecken, wobei der Förderer (1) des weiteren eine zweite Laufbahn für den gleichzeitigen Eingriff der Führungselemente (10) aufweist, die sich im wesentlichen parallel zu und mit einem Abstand von der erstgenannten Laufbahn in der Nähe der voneinander weg gerichteten Außenseiten des Riemens erstreckt,
**dadurch gekennzeichnet, dass**
die Laufbahnen durch zwei bogenförmige Stirnplatten definiert sind und dass die Stirnplatte (8), die die zweite Laufbahn definiert, bezüglich der Stirnplatte (7), die die erste Laufbahn definiert, mittels vielzähliger Joche (11) zurückgehalten wird, um einen freien Durchgang für die Führungselemente zu schaffen, und dass die Joche (11) voneinander beabstandet sind, um die Zugreifbarkeit zu den Führungselemente vorzusehen.

2. Förderer gemäß Anspruch 1,
**dadurch gekennzeichnet, dass**
jedes Joch (11) durch einen stabförmigen Querbalken ausgebildet ist, von dessen einer Seite drei gegenseitig voneinander beabstandete Schenkel vorstehen, wobei die zwei äußersten Schenkel an der zweiten Laufbahn gesichert sind, wobei der mittlere Schenkel an der ersten Laufbahn gesichert ist, so dass die Joche die Transportbahn und die Rückführbahn des Riemens überbrücken.

3. Förderer gemäß Anspruch 2,
**dadurch gekennzeichnet, dass**
die Joche (11) abnehmbar an der erstgenannten Laufbahn gesichert sind.

4. Förderer gemäß Anspruch 2 oder 3,
**dadurch gekennzeichnet dass,**
die Joche (11) abnehmbar an der zweiten Laufbahn gesichert sind.

5. Förderer gemäß einem der vorhergehenden Ansprüche,
**dadurch gekennzeichnet, dass**
der Riemen (4) sich zwischen den Laufbahnen erstreckt, dass jedes Führungselement aus zwei Teilen, die bezüglich zueinander gesichert sind, an ihren jeweiligen Seiten des Riemens ausgebildet ist, wobei jedes der Teile zumindest eine Drehwelle (13) rechtwinklig zu der Ebene des Riemens und eine Walze (12) aufweist, die mit der Laufbahn eingreift.

6. Förderer gemäß einem oder mehrerer der vorhergehenden Ansprüche,
**dadurch gekennzeichnet, dass**
die Laufbahnen oder die Walzen (12) mit Kunststoffmaterial beschichtet sind oder daraus ausgebildet sind.

7. Förderer gemäß einem oder mehrerer der vorhergehenden Ansprüche,
**dadurch gekennzeichnet, dass**
die Führungselemente (10) elastisch an dem Riemen über Federelemente montiert sind.

8. Förderer gemäß einem der vorhergehenden Ansprüche,
**dadurch gekennzeichnet, dass**
die Transportbahn eben ist und dadurch einen kreisförmigen Bogen beschreibt, und dass sich der Riemen (4) an der Rückführseite in einer konischen Fläche erstreckt, die sich unterhalb der äußeren Ebene erstreckt und einen Scheitelpunkt in der oberen Ebene und in der Mitte des kreisförmigen Bogens hat und dadurch ein Segment einer Kegelstumpfseite beschreibt.

9. Förderer gemäß Anspruch 6,
**dadurch gekennzeichnet, dass**
die Tragseite des Riemens entlang des größeren Teils von dessen Länge ungefähr mit rechten Winkeln zu der oberen horizontalen Ebene orientiert ist, und dass die Laufbahnen an der unteren Rückführseite überall ungefähr mit rechten Winkeln zu den Erzeugenden der konusförmigen Seite orientiert sind.

10. Förderer gemäß Anspruch 6,
**dadurch gekennzeichnet, dass**
die Laufbahnen entlang des größeren Teils ihrer Länge ungefähr mit rechten Winkeln zu den Winkelhalbierenden zwischen den Erzeugenden der konusförmigen Seite und der oberen Ebene orientiert sind.

## Revendications

1. Convoyeur (1) ayant une courroie (4) sans fin, flexible, de forme conique s'étendant autour d'au moins deux rouleaux coniques (5), entre lesquels la courroie (4) est maintenue étirée selon un trajet à courbure contrôlée, ladite courroie (4) étant munie, sur son bord le plus long, d'une pluralité d'éléments de guidage (10) étirant la courroie (4) par l'engagement des éléments de guidage (10) avec un premier parcours en déplacement, lequel est retenu par rapport à un châssis et s'étend le long du bord le plus long de la courroie (4), au voisinage des côtés internes opposés du parcours de transport et du trajet de retour de la courroie (4), le convoyeur (1) comprenant en outre un deuxième parcours en déplacement pour l'engagement simultané des éléments de guidage (10) s'étendant sensiblement parallèlement, et à distance, du parcours en déplacement mentionné en premier, au voisinage des côtés extérieurs de la courroie dirigés à l'opposé les uns des autres, **caractérisé en ce que** les parcours en déplacement sont définis par deux plaques de pignon en forme d'arc, et en ce que la plaque de pignon (8) définissant le deuxième parcours en déplacement est retenue par rapport à la plaque de pignon (7) définissant le premier parcours en déplacement, au moyen d'une pluralité d'étriers (11) afin de fournir un libre passage aux éléments de guidage, et en ce que les étriers (11) sont espacés les uns des autres de façon à rendre accessibles les éléments de guidage.

2. Convoyeur selon la revendication 1, **caractérisé en ce que** chaque étrier (11) est formé par une barre transversale en forme de tige depuis un côté de laquelle dépassent trois pattes espacées mutuellement, les deux pattes les plus à l'extérieur étant fixées au deuxième parcours en déplacement, la patte intermédiaire étant fixée au premier parcours en déplacement, de sorte que les étriers effectuent un pontage du trajet de transport et du trajet de retour de la courroie.

3. Convoyeur selon la revendication 2, **caractérisé en ce que** les étriers (11) sont fixés de façon amovible au parcours en déplacement mentionné en premier.

4. Convoyeur selon la revendication 2 ou 3, **caractérisé en ce que** les étriers (11) sont fixés de façon amovible au deuxième parcours en déplacement.

5. Convoyeur selon une des revendications précédentes, **caractérisé en ce que** la courroie (4) s'étend entre les parcours en déplacement et en ce que chaque élément de guidage est formé par deux parties fixées l'une à l'autre sur leur côté respectif de la courroie, chacune desdites parties comprenant au moins un arbre rotatif (13) à angle droit par rapport au plan de la courroie et un rouleau (12) venant au contact du parcours en déplacement.

6. Convoyeur selon une ou plusieurs des revendications précédentes, **caractérisé en ce que** les parcours en déplacement ou les rouleaux (12) sont revêtus ou sont formés d'un matériau plastique.

7. Convoyeur selon une ou plusieurs des revendications précédentes, **caractérisé en ce que** les éléments de guidage (10) sont montés élastiquement sur la courroie par l'intermédiaire d'éléments de ressort.

8. Convoyeur selon une des revendications précédentes, **caractérisé en ce que** le trajet de transport est plan et décrit ainsi un arc de cercle, et en ce que sur son côté de retour la courroie (4) s'étend selon une face conique s'étendant au-dessous du plan extérieur et ayant un sommet dans le plan supérieur et au centre de l'arc de cercle, en décrivant ainsi un segment de la face d'un tronc de cône.

9. Convoyeur selon la revendication 6, **caractérisé en ce que**, le long de la majeure partie de sa longueur, le côté porteur de la courroie est orienté approximativement à angle droit du plan horizontal supérieur, et en ce que les parcours en déplacement du côté de retour inférieur sont orientés en tout point approximativement à angle droit des génératrices de la face en forme de cône.

10. Convoyeur selon la revendication 6, **caractérisé en ce que**, le long de la majeure partie de leur longueur, les parcours en déplacement sont orientés approximativement à angle droit des bissectrices de l'angle entre les génératrices de la face en forme de cône et le plan supérieur.
